# EUROPÄISCHE PATENTSCHRIFT

(11) **EP 2 104 545 B1**
(45) Veröffentlichungstag und Bekanntmachung des Hinweises auf die Patenterteilung: **14.05.2014**
(21) Anmeldenummer: 07822155.3
(22) Anmeldetag: 02.11.2007
(51) Int. Cl.: B01D 27/14, B01D 36/00

(54) **FLÜSSIGKEITSFILTER**
LIQUID FILTER
FILTRE À LIQUIDE

(30) Priorität: 20.12.2006 DE 102006060129
(43) Veröffentlichungstag der Anmeldung: 30.09.2009
(73) Patentinhaber: MAHLE International GmbH, 70376 Stuttgart (DE)
(72) Erfinder: LIKA, Torsten, 70197 Stuttgart (DE)
(74) Vertreter: BRP Renaud & Partner
(86) Internationale Anmeldenummer: PCT/EP2007/061824
(87) Internationale Veröffentlichungsnummer: WO 2008/074562

(56) Entgegenhaltungen:
- EP-A- 0 662 337
- EP-A- 0 889 229

## Beschreibung

Die Erfindung betrifft ein Flüssigkeitsfilter nach dem Oberbegriff des Patentanspruchs 1. Das Flüssigkeitsfilter kann insbesondere als ein Kraftstofffilter mit einem Sammelraum für in diesem Filter aus dem Kraftstoff abgeschiedenes Wasser ausgebildet sein.

Aus der EP 0 889 229 A ist eine Filtereinrichtung mit einem radial von außen nach innen durchströmbaren Ringfiltereinsatz bekannt, der eine erste und eine zweite Endscheibe aufweist, wobei die erste Endscheibe dem, einer Montageöffnung eines Filtergehäuses abgewandten Ende benachbart liegt. Darüber hinaus bildet der Ringfiltereinsatz innerhalb des Filtergehäuses einen radial außen liegenden Rohraum und einen radial innen liegenden Reinraum.

Erfindungsgemäß soll das gesamte Flüssigkeitsfilters rationell und damit kostengünstig herstellbar ausgebildet sein.

Zu diesem Zweck ist ein gattungsgemäßer Flüssigkeitsfilter erfindungsgemäß nach dem kennzeichnenden Merkmal des Anspruchs 1 ausgebildet. Ein gattungsgemäßes Flüssigkeitsfilter kann insbesondere in dieser Form als Kraftstofffilter ausgebildet sein, bei dem während der Filtration abgeschiedenes Wasser in einem Wassersammelraum aufgefangen und von dort nach außen abgeführt wird.

Vorteilhafte und zweckmäßige Ausgestaltungen der Erfindung sind Gegenstand der Unteransprüche.

Die Erfindung beruht in erster Linie auf dem allgemeinen Gedanken, Flüssigkeit, die einem Filtergehäuse mit einem darin lagernden Ringfiltereinsatz zentral im Bereich der Ringfilterachse zugeführt wird, durch mindestens einen, in einer der beiden Endscheiben vorgesehenen Kanal von radial innen nach radial außen in einen radial außen gelegenen Filterrohraum zu führen. Eine Endscheibe mit einem solchen Kanal kann einstückig aus insbesondere Kunststoff äußerst rationell hergestellt werden. Eine einstückige Herstellbarkeit ist beispielsweise durch, aus einer Gießform, insbesondere Spritzgießform, nach dem Guss entformbare Kerne einfach möglich.

Ein vorteilhaftes, nachstehend näher beschriebenes Ausführungsbeispiel ist in der Zeichnung dargestellt.

In dieser zeigen
- Fig. 1: einen Längsschnitt nach jeweils der Linie I-I in Fig. 3 oder 4 durch ein Filter, bei dem ein Filtergehäuse auswechselbar an einem abtrennbaren Stab zur Ausbildung eines betriebsfähigen Filters befestigt ist,
- Fig. 2: einen Schnitt durch das Filtergehäuse nach Linie II-II in Fig. 1,
- Fig. 3: eine Draufsicht auf das Filter nach Fig. 1,
- Fig. 4: einen Schnitt nach Linie IV-IV in Fig. 1.

Ein Kraftstofffilter für einen Kraftfahrzeugverbrennungsmotor umfasst ein mit einer Stabeinrichtung 1 lösbar verbindbares Filtergehäuse 2 mit einem in dem Filtergehäuse 2 gelagerten, radial von außen nach innen durchströmbaren Ringfiltereinsatz 3.

Der Ringfiltereinsatz 3 ist stirnseitig gedichtet durch eine erste Endscheibe 4 und eine zweite Endscheibe 5. Beide Endscheiben 4, 5 sind radial außen jeweils mit einem ersten Dichtring 6 versehen, über die die beiden Endscheiben 4, 5 radial gegenüber dem Filtergehäuse 1 gedichtet sind. Der zwischen den beiden ersten Dichtringen 6 der beiden Endscheiben 4 und 5 liegende Raum zwischen einem Filtermedium 7 des Ringfiltereinsatzes 3 und dem Filtergehäuse 2 ist Teil des Filter-Rohraumes 8.

Ein Stab 9 als Bestandteil der Stabeinrichtung 1 durchdringt von einer ersten Stirnseite 10 des Filtergehäuses 2 aus den Ringfiltereinsatz 3 bis in einen Aufnahmeraum 11 des Filtergehäuses 2. Dieser Aufnahmeraum 11 ist begrenzt durch einerseits einen Bereich des Filtergehäuses 2 an dessen zweiter Stirnseite 12 sowie die erste Endscheibe 4, wobei diese erste Endscheibe 4 radial außen durch den ersten Dichtring 6 gegenüber dem Filtergehäuse 2 und radial innen durch einen zweiten Dichtring 13 gegenüber dem Stab 9 gedichtet ist. Der Stab 9 weist einen Kraftstoffzufuhrkanal 14 auf, der mit einem Zufuhrstutzen 15 kommuniziert, der die erste Stirnseite 10 des Filtergehäuses 2 durchdringt. Der Kraftstoffzufuhrkanal 14 im Inneren des Stabes 9 kommuniziert innerhalb des Filtergehäuses über einen Raum 16 mit dem Zufuhrstutzen 15. Begrenzt wird der Raum 16 durch einen fest und dicht mit der Innenseite der ersten Stirnseite 10 des Filtergehäuses 2 verbundenen, in einen axialen Teilbereich über die zweite Endscheibe 5 in den Ringfiltereinsatz 3 zentral eingreifenden Stutzen 17 sowie einen Kopfbereich 18 der den Stab 9 umfassenden Stabeinrichtung 1. Der Kopfbereich 18 ist dabei gegenüber der ersten Stirnseite 10 des Filtergehäuses 2 über einen dritten Dichtring 19 gedichtet. Der Stutzen 17 durchdringt im Inneren des Filtergehäuses 2 einen zwischen der ersten Endscheibe 5 und der ersten Stirnseite des Filtergehäuses liegenden Raum 20. In diesem Raum 20 weist der Stutzen 17 im Bereich des Zufuhrstutzens 15 eine radiale Ausbuchtung auf, um die erforderliche Verbindung gegenüber dem Kraftstoffzufuhrkanal 14 innerhalb des Stabes 9 zu ermöglichen.

Abströmseitig, das heißt reinseitig des Filtermediums 7 des Ringfiltereinsatzes 3 ist ein ringförmiges Abscheideelement 21 vorgesehen. Dieses Abscheideelement 21 ist fest und dicht mit der zweiten Endscheibe 5 verbunden. Gegenüber der ersten Endscheibe 4 liegt eine lösbare, dichte Verbindung vor. Die Dichtung erfolgt über einen sechsten Dichtring 22 zwischen radial außen einem axialen Endbereich des Abscheideelementes 21 und einem radialen Innenbereich eines Kragens 23 der ersten Endscheibe 4. Der Raum 20 ist Bestandteil des Filter-Reinraumes 24 und kommuniziert nach außerhalb des Filtergehäuses 2 über einen in der ersten Stirnseite 10 des Filtergehäuses 2 vorgesehenen Abflussstutzen 25. Eine Trennung zwischen dem Rohraum 16 und dem Reinraum 24 des Filters erfolgt im Bereich der zweiten Endscheibe 5 zwischen dem Stab 9 und dem Stutzen 17 über einen vierten Dichtring 26. Für eine leitende Verbindung zwischen dem rohseitig liegenden Raum 16 und dem Kraftstoffzufuhrkanal 14 innerhalb des Stabes 9 dienen in der Stabeinrichtung 1 zwischen dessen Kopfbereich 18 und dem Stab 9 vorgesehene Öffnungen 27. Diese Öffnungen 27 ergeben sich praktisch daraus, dass der Kopfbereich 18 der Stabeinrichtung 1 mit dem Stab 9 lediglich über umfangsmäßig gegeneinander beabstandete Rippen 27 verbunden ist.

Die Durchströmung des Filters ist durch Strömungspfeile angedeutet.

Dem Verlauf der Strömungspfeile ist zu entnehmen, dass durch den Kraftstoffzufuhrkanal 14 rohseitig einströmende, Kraftstoff im Bereich der ersten Endscheibe 4 von radial innen nach radial außen in den stromauf des Filtermediums 7 liegenden Bereich des Filterrohraumes 8 eintritt.

Die Führung des Kraftstoffes von radial innen nach radial außen in dem vorgenannten Bereich stellt sich wie folgt dar. In der ersten Endscheibe 4 sind zwei etwa diametral entgegengerichtete radiale Verbindungskanäle 28 vorgesehen. Bei einer aus Kunststoff bestehenden ersten Endscheibe 4 kann eine solche Endscheibe als Gussteil mit, die Kanäle 28 ausformenden, entfernbaren Gießkernen erzeugt werden. Auf diese Weise lässt sich eine solche Endscheibe 4 rationell einstückig herstellen.

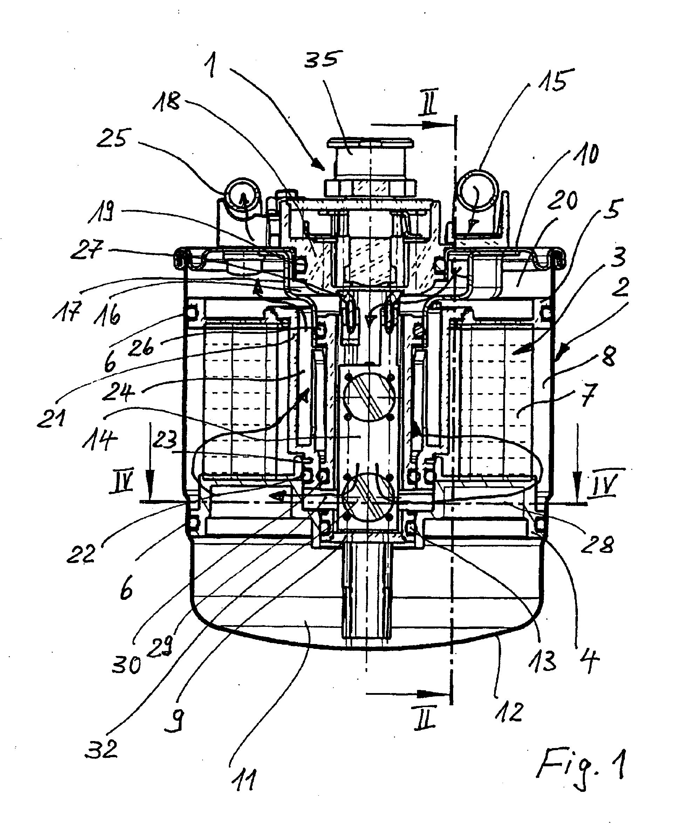

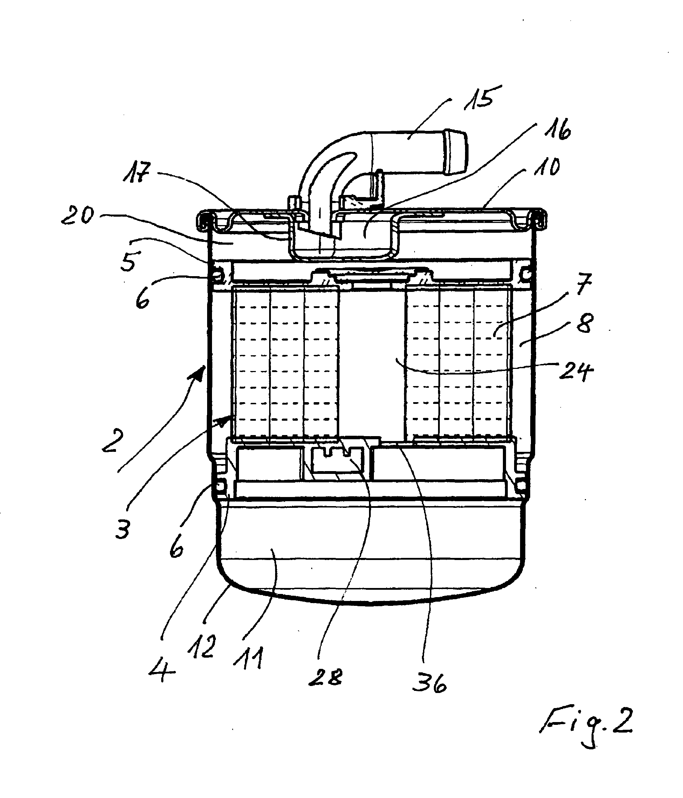

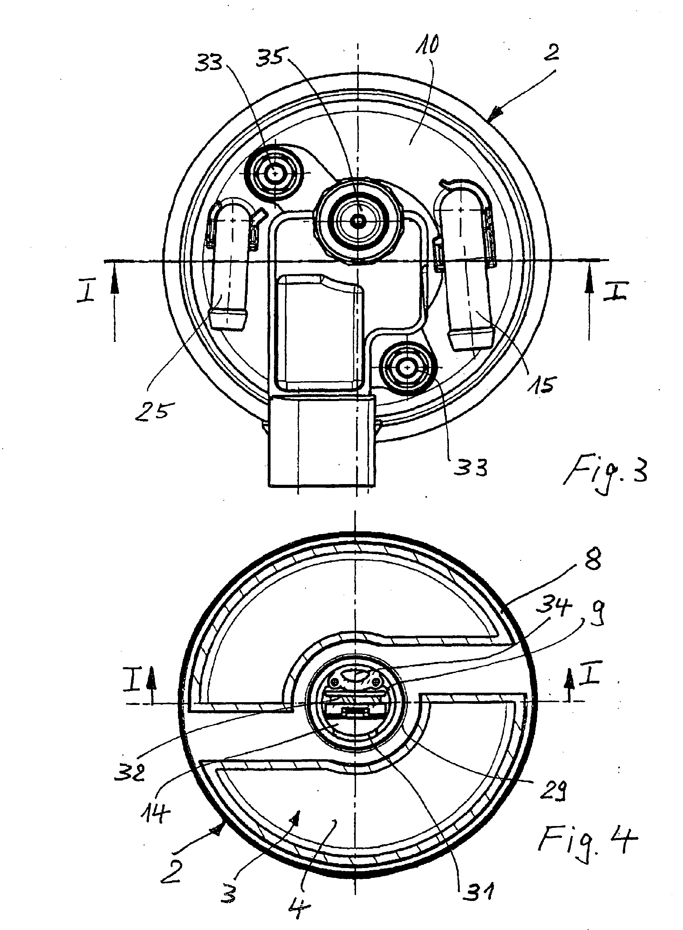

Das Innere der Kanäle 28 ist durch eine für die Fig. 1 gewählte Schnittführung durch das Filtergehäuse in Fig. 1 nicht erkennbar. In den Schnitten der Fig. 2 und 4 sind die Kanäle 28 jedoch geschnitten dargestellt, so dass hieraus deren Verlauf deutlich entnommen werden kann. Die Kanäle 28 münden radial offen in den stromauf des Filtermediums 7 liegenden Bereich des Filterrohraumes 8. Im radial innen liegenden Umfangsbereich der ersten Endscheibe 4 münden die Kanäle 28 jeweils radial in einen Ringraum 29. Dieser zwischen dem Stab 9 und dem Innenumfang der ersten Endscheibe 4 liegende Ringraum 29 ist nach außerhalb gedichtet durch einerseits den zwischen der ersten Endscheibe 4 und dem Stab 9 vorgesehenen, bereits weiter oben erwähnten zweiten Dichtring 13, der an den Aufnahmeraum 11 angrenzt sowie durch einen weiteren fünften Dichtring 30 zwischen dem Stab 9 und einem gegenüber der ersten Endscheibe 4 über einen dritten Dichtring 22 gedichteten Bereich des Abscheideelementes 21.

Mit dem Kraftstoffzuführkanal 14 ist der Ringraum 29 leitend über eine in dem Stab 9 vorgesehene, schlitzförmige Öffnung 31 verbunden.

In dem Stab 9 der Stabeinrichtung 1 sind elektrische Heizelemente 32 vorgesehen, um den, durch den Kraftstoffzuführkanal 14 fließenden Kraftstoffstrom erwärmen zu können. Die elektrische Heizenergie wird über elektrische Leitungen zugeführt, die durch den Kopfbereich 18 der Stabeinrichtung 1 nach außerhalb des Filtergehäuses 2 geführt werden.

Die Stabeinrichtung 1 ist über Schraubverbindungen 33 lösbar mit der ersten Stirnseite 10 des Filtergehäuses 2 verbunden.

Der Aufnahmeraum 11 steht über einen zusätzlich zu dem Kraftstoffzuführkanal 14 in dem Stab vorgesehenen Strömungskanal 34 mit dem Kopfbereich 18 der Stabeinrichtung leitend in Verbindung. In dem Kopfbereich 18 ist ein Verschlusselement 35 vorgesehen, mit dem der Strömungskanal 34 nach außen geschlossen oder geöffnet werden kann.

Das gezeichnete und vorstehend beschriebene Filter stellt die Ausführung eines Kraftstofffilters eines Kraftfahrzeug-Verbrennungsmotors dar. Das Abscheideelement 21 reinseitig des Filtermediums 7 des Ringfiltereinsatzes 3 ist ein sogenannter Coalescer, mit dem Wasseranteile aus dem Kraftstoff abgeschieden werden können. Dieses reinseitig durch beziehungsweise an dem, als Coalescer ausgebildeten Abscheideelement 21 abgeschiedene Wasser kann durch in der ersten Endscheibe 4 vorgesehene, diese radial innen durchgreifende Öffnungen 36 in den Aufnahmeraum 11, der als Wassersammelraum dient, abfließen. Auf dem radial innen liegenden Umfang der ersten Endscheibe 4 können mehrere Öffnungen 36 vorgesehen sein, von der lediglich eine in einem Schnitt in Fig. 2 sichtbar ist. Das in dem Aufnahmeraum 11 gesammelte, abgeschiedene Wasser kann durch den Strömungskanal 34 innerhalb des Stabes 9 abgeführt werden und zwar entweder durch Absaugen oder unter einem von der zu reinigenden, das Filter durchströmenden Kraftstoff aufgebrachten Druck. Zum Abführen von Wasser aus dem Aufnahmeraum 11 ist das Verschlusselement 35 temporär zu öffnen.

Der Aufbau des Filters gestattet ein Abtrennen des Filtergehäuses 2 von der Stabeinrichtung 1. Dies bedeutet, dass unter Beibehaltung der Stabeinrichtung 1 das Filtergehäuse 2 einschließlich des Ringfiltereinsatzes 3 bei einem betriebsbedingt erschöpften Filter gewechselt werden kann.

Ein Kraftstofffilter der beschriebenen und gezeichneten Art wird beispielsweise über ein metallisches Spannband an einem Motor befestigt, wobei dieses nicht gezeichnete Spannband in dem, an die erste Stirnseite 10 des Filtergehäuses 2 angrenzenden Gehäusebereich angesetzt wird.

Bei einem erforderlichen Filterwechsel wird das Spannband gelöst, so dass das Filtergehäuse 2 dann lediglich noch an beispielsweise flexiblen, mit den Stutzen 15 und 25 verbundenen Leitungen zur Zu- und Abfuhr des Kraftstoffes hängt. In diesem Zustand kann das Filtergehäuse 2 durch Auftrennung der Schraubverbindungen 33 von der wiederverwendbaren Stabeinrichtung 1 getrennt und durch ein neues ersetzt werden. Soweit an der Stabeinrichtung 1 Dichtungen vorgesehen sind, mit denen gegenüber Bereichen des auszutauschenden Filtergehäuses 2 beziehungsweise den darin gelagerten Teilen gedichtet wird, können diese Dichtungen bei einem Filterwechsel erneuert werden.

Das Filter muss in dem Fahrzeug in montiertem Zustand eine Betriebslage haben, bei der der Aufnahmeraum 11 für ein schwerkraftbedingtes Absetzen abgeschiedenen Wassers unten liegt.

Alle in der Beschreibung und in den nachfolgenden Ansprüchen dargestellten Merkmale können sowohl einzeln als auch in beliebiger Form miteinander kombiniert erfindungswesentlich sein.

## Patentansprüche

1. Flüssigkeitsfilter mit einem radial durchströmbaren Ringfiltereinsatz (3) mit einer ersten und zweiten, jeweils ringförmigen Endscheibe (4, 5), bei dem
- der Ringfiltereinsatz (3) innerhalb eines zylindrischen Filtergehäuses (2) lagert,
- an einem axialen Ende des Filtergehäuses (2) eine zentrale Montageöffnung vorgesehen ist,
- das Filtergehäuse (2) über die Montageöffnung auf einen, als Flüssigkeitsversorgungseinrichtung dienenden, zylindrischen Stab (9) reversibel aufschiebbar ist,
- das Flüssigkeitsfilter bei auf den Stab (9) aufgeschobenem Filtergehäuse (2) betriebsfähig ist,
- der Stab (9) den Ringfiltereinsatz (3) des Filters zumindest teilweise durchgreift,
- die erste Endscheibe (4) des Ringfiltereinsatzes (3) dem, der Montageöffnung abgewandten Ende des Filtergehäuses (2) benachbart liegt,
- der Ringfiltereinsatz (3) innerhalb des Filtergehäuses (2) einen radial außen liegenden Rohraum (8) und einen radial innen liegenden Reinraum (24) bildet,
- zwischen der ersten Endscheibe (4) und dem der Montageöffnung abgewandten Ende des Filtergehäuses (2) ein von dem Rohraum getrennter Aufnahmeraum (11) vorgesehen ist,
- ein Abflussstutzen (25) für gereinigte Flüssigkeit in einem an die Montageöffnung des Filtergehäuses (2) angrenzenden Bereich mit dem Reinraum (24) innerhalb des Filtergehäuses (2) kommunizierend vorgesehen ist,
- mindestens eine der beiden Endscheiben (4, 5) mindestens einen Verbindungskanal (28) aufweist, über den der, die zu reinigende Flüssigkeit führende Innenraum des Stabes (9) und der Filterrohraum (8) bei betriebsfähigem Montagezustand des aus Ringfiltereinsatz (3), Filtergehäuse (2) und Stab (9) bestehenden Filters miteinander kommunizieren,
**dadurch gekennzeichnet,**
**dass** der Verbindungskanal (28) innerhalb der ersten Endscheibe (4) angeordnet ist.

2. Flüssigkeitsfilter nach Anspruch 1,
**gekennzeichnet durch** die Merkmale,
- der zwischen Rein- und Rohraumseite (24; 8) des Filtereinsatzes (3) liegende Aufnahmeraum (11) kommuniziert mit einem, **durch** den Stab (9) nach außerhalb des Stabes (9) verlaufenden Strömungskanal (34),
- der Reinraum (24) des Filtergehäuses (2) kommuniziert über, in der ersten Endscheibe (4) vorgesehene Öffnungen (36) mit dem Aufnahmeraum (11).

3. Flüssigkeitsfilter nach einem der vorhergehenden Ansprüche,
**dadurch gekennzeichnet,**
**dass** an den Endscheiben (4, 5) jeweils ein radial außen liegender, umlaufender Bereich vorgesehen ist, in dem der Ringfiltereinsatz jeweils dicht an dem Filtergehäuse (2) zur Ausbildung des, von diesen dichten Bereichen einschließbaren Filterrohraumes (8) anliegen kann.

4. Flüssigkeitsfilter nach einem der vorhergehenden Ansprüche,
**dadurch gekennzeichnet,**
**dass** in den radial außen liegenden Dichtbereichen der Endscheiben (4, 5) jeweils radiale Dichtringe (6) vorgesehen sind.

5. Flüssigkeitsfilter nach einem der vorhergehenden Ansprüche,
**dadurch gekennzeichnet,**
**dass** der mindestens eine, innerhalb der ersten Endscheibe (4) liegende Verbindungskanal (28) innerhalb des radial innen liegenden Umfangsbereiches dieser ersten Endscheibe (4) in einen, axial zwischen zwei, in betriebsfähig montiertem Zustand des Ringfiltereinsatzes (3) gegenüber dem Stab (9) gedichteten Bereichen liegenden Ringraum (29) mündet.

6. Flüssigkeitsfilter nach Anspruch 5,
**dadurch gekennzeichnet,**
**dass** die an dem Ringfiltereinsatz (3) vorgesehenen dichtbaren Bereiche, zwischen denen der Verbindungskanal (28) nach radial innen aus der ersten Endscheibe (4) austritt, als für eine dichte Anlage an dem Stab (9) vorgesehene Dichtringe (13, 30) ausgebildet sind.

7. Flüssigkeitsfilter nach einem der vorhergehenden Ansprüche,
**dadurch gekennzeichnet,**
**dass** reinseitig des Ringfiltereinsatzes (3) ein ringförmiges Abscheideelement (21) für Bestandteile aus der gereinigten Flüssigkeit vorgesehen ist.

8. Flüssigkeitsfilter nach Anspruch 7,
**gekennzeichnet durch** die Merkmale,
- das ringförmige Abscheideelement (21) ist fest mit der zweiten Endscheibe (5) verbunden,
- in einem, an die erste Endscheibe (4) angrenzenden Bereich des Abscheideelementes (21) ist ein gegenüber der ersten Endscheibe (4) oder dem Stab (9) dicht anlegbarer Abschnitt vorgesehen.

9. Flüssigkeitsfilter nach einem der vorhergehenden Ansprüche, bei dem der Stab (9) lösbar dicht mit dem Filtergehäuse (2) verbindbar ist.

10. Flüssigkeitsfilter nach einem der vorhergehenden Ansprüche,
**dadurch gekennzeichnet,**
**dass** in dem Inneren des Stabes (9) eine von elektrischen Heizelementen (32) gebildete Heizeinrichtung vorgesehen ist.

11. Flüssigkeitsfilter nach einem der vorhergehenden Ansprüche,
**dadurch gekennzeichnet,**
**dass** das Filtergehäuse (2) als eine irreversibel geschlossene Blechpatrone ausgebildet ist.

12. Flüssigkeitsfilter nach einem der vorhergehenden Ansprüche als Kraftstofffilter eines Kraftfahrzeug-Verbrennungsmotors, bei dem der Aufnahmeraum (11) in dem Filtergehäuse (2) als Wassersammelraum für reinseitig des Ringfiltereinsatzes (3) aus dem gereinigten Kraftstoff abgeschiedenes Wasser dient und das gegebenenfalls vorhandene Abscheideelement (21) als Wasserabscheider ausgebildet ist.

13. Flüssigkeitsfilter nach einem der vorhergehenden Ansprüche,
**dadurch gekennzeichnet,**
**dass** innerhalb des Stabes (9) ein Strömungskanal (34) zur Abfuhr von in dem Aufnahmeraum aufgefangenen Wassers vorgesehen ist.

14. Flüssigkeitsfilter nach einem der vorhergehenden Ansprüche,
**dadurch gekennzeichnet,**
**dass** zwischen der zweiten Endscheibe (5) und der angrenzenden, axialen Stirnseite des Filtergehäuses (2) ein von der Reinseite (24) getrennter mit der Rohseite verbundener erster Raum (16) vorgesehen ist, der einerseits mit einem durch das Filtergehäuse (2) führenden Flüssigkeitszufuhrstutzen (15) und andererseits mit dem Inneren des Stabes (9) kommuniziert.

15. Flüssigkeitsfilter nach einem der vorhergehenden Ansprüche,
**dadurch gekennzeichnet,**
**dass** zwischen der zweiten Endscheibe (5) und der angrenzenden, axialen Stirnseite (10) des Filtergehäuses (2) ein von der Rohseite (8) getrennter, mit der Reinseite (24) verbundener zweiter Raum (20) vorgesehen ist, der mit einem, durch das Filtergehäuse (2) geführten Abführstutzen (25) für gereinigte Flüssigkeit kommuniziert.

## Claims

1. A liquid filter with a ring filter insert (3) which can be flowed-through radially, comprising a first annular and a second annular end disk (4, 5), wherein
- the ring filter insert (3) is supported within a cylindrical filter housing (2),
- a central mounting opening is provided at an axial end of the filter housing (2),
- the filter housing (2) can be reversibly slid via the mounting opening onto a cylindrical rod (9) which serves as a liquid supply device,
- the liquid filter is operational when the filter housing (2) is slid onto the rod (9),
- the rod (9) penetrates the ring filter insert (3) of the filter at least partially,
- the first end disk (4) of the ring filter insert (3) is adjacent to the filter housing's (2) end facing away from the mounting opening,
- the ring filter insert (3) forms within the filter housing (2) a radially outer crude chamber (8) and a radially inner clean chamber (24),
- between the first end disk (4) and the filter housing's (2) end facing away from the mounting opening, a receiving chamber (11) is provided which is separated from the crude chamber,
- a discharge port (25) for cleaned liquid is provided in an area adjacent to the mounting opening of the filter housing (2) so as to communicate with the clean chamber (24) within the filter housing (2),
- at least one of the two end disks (4, 5) has at least one connection channel (28) by means of which the interior of the rod (9) conveying the liquid to be cleaned and the filter crude chamber (8) communicate with each other at in the operational assembly condition of the filter consisting of ring filter insert (3), filter housing (2), and rod (9),
**characterized in**
**that** the connection channel (28) is arranged within the first end disk (4).

2. The liquid filter according to claim 1,
**characterized by** the features
- the receiving chamber (11) located between the clean chamber side and the crude chamber side (24; 8) of the ring filter insert (3) communicates with a flow channel (34) running through the rod (9) towards the outside of the rod (9),
- the clean chamber (24) of the filter housing (2) communicates with the receiving chamber (11) via openings (36) provided in the first end disk (4).

3. The liquid filter according to any one of the preceding claims,
**characterized in**
**that** on each of the end disks (4, 5), a radially outer circumferential area is provided in each of which the ring filter insert can abut tightly against the filter housing (2) for forming the filter crude chamber (8) enclosable by these sealed areas.

4. The liquid filter according to any one of the preceding claims,
**characterized in**
**that** in each of the radially outer sealing areas of the end disks (4, 5), radial sealing rings (6) are provided.

5. The liquid filter according to any one of the preceding claims,
**characterized in**
**that** the at least one connection channel (28) located within the first end disk (4) ends within the radially inner circumferential area of this first end disk (4) in a ring chamber (29) which is located axially between two areas which are sealed with respect to the rod (9) in the operational assembly condition of the ring filter insert (3).

6. The liquid filter according to claim 5,
**characterized in**
**that** the sealable areas provided at the ring filter insert (3), between which areas the connection channel (28) exits the first end disk (4) radially inwards, are formed as a sealing contact surface for the sealing rings (13, 30) provided at the rod (9).

7. The liquid filter according to any one of the preceding claims,
**characterized in**
**that** on the clean side of the ring filter insert (3), an annular separating element (21) is provided for parts from the cleaned liquid.

8. The liquid filter according to claim 7,
**characterized by** the features
- the annular separating element (21) is fixedly connected to the second end disk (5),
- in an area of the separating element (21) adjacent to the first end disk (4), a section is provided which can be tightly abutted with respect to the first end disk (4) or the rod (9).

9. A liquid filter according to any one of the preceding claims, wherein the rod (9) can be connected in a detachable and sealing manner to the filter housing (2).

10. The liquid filter according to any one of the preceding claims,
**characterized in**
**that** inside the rod (9), a heating device formed by means of electrical heating elements (32) is provided.

11. The liquid filter according to any one of the preceding claims,
**characterized in**
**that** the filter housing (2) is formed as an irreversibly closed sheet metal cartridge.

12. The liquid filter according to any one of the preceding claims as a fuel filter of an internal combustion engine of a motor vehicle, for which fuel filter the receiving chamber (11) in the filter housing (2) serves as a water collecting chamber for water which is separated on the clean side of the ring filter insert (3) from the cleaned fuel, and the separating element (21), if in place, is formed as a water separator.

13. The liquid filter according to any one of the preceding claims,
**characterized in**
**that** within the rod (9), a flow channel (34) is provided for discharging of water collected in the receiving chamber.

14. The liquid filter according to any one of the preceding claims,
**characterized in**
**that** between the second end disk (5) and the adjacent axial front side of the filter housing (2), a first chamber (16) is provided which is separated from the clean side (24) and is connected to the crude side and which communicates, on the one hand, with a liquid supply port (15) running through the filter housing (2) and, on the other hand, with the inside of the rod (9).

15. The liquid filter according to any one of the preceding claims,
**characterized in**
**that** between the second end disk (5) and the adjacent axial front side (10) of the filter housing (2), a second chamber (20) is provided which is separated from the crude side (8) and is connected to the clean side (24) and which communicates with a discharge port (25) running through the filter housing (2) for cleaned liquid.

## Revendications

1. Filtre à liquide comportant une cartouche filtrante annulaire (3) traversée radialement par un écoulement avec une première et une deuxième rondelle d'extrémité (4,5) respectivement annulaires, dans lequel:
- la cartouche filtrante annulaire (3) est positionnée à l'intérieur d'un logement de filtre cylindrique (2),
- une ouverture de montage centrale est prévue à une extrémité axiale du logement de filtre (2),
- le logement de filtre (2) peut être enfoncé de manière réversible par l'intermédiaire de l'ouverture de montage sur une barre (9) cylindrique, servant de dispositif d'alimentation en liquide,
- le filtre à liquide est apte à fonctionner quand le logement de filtre (2) est enfoncé sur la barre (9),
- la barre (9) traverse au moins partiellement la cartouche filtrante annulaire (3) du filtre,
- la première rondelle d'extrémité (4) de la cartouche filtrante annulaire (3) est située à proximité de l'extrémité du logement de filtre (2) qui se détourne de l'ouverture de montage,
- la cartouche filtrante annulaire (3) forme à l'intérieur du logement de filtre (2) un espace brut (8) situé radialement à l'extérieur et un espace purifié (24) situé radialement à l'intérieur,
- entre la première rondelle d'extrémité (4) et l'extrémité du logement de filtre (2) qui se détourne de l'ouverture de montage, un espace de réceptacle (11) séparé de l'espace purifié est prévu,
- un embout de déversement (25) pour le liquide purifié dans une zone contiguë à l'ouverture de montage du logement de filtre (2) est prévu de manière communicante avec l'espace purifié (24) à l'intérieur du logement de filtre (2),
- au moins une des deux rondelles d'extrémité (4,5) présente au moins un canal de liaison (28), par l'intermédiaire duquel l'espace intérieur de la barre (9) guidant le liquide à purifier et l'espace de tuyau de filtre (8) communiquent l'un avec l'autre lors de l'état de montage apte à fonctionner du filtre constitué de la cartouche filtrante annulaire (3), du logement de filtre (2) et de la barre (9),
**caractérisé en**
**ce que** le canal de liaison (28) est disposé à l'intérieur de la première rondelle d'extrémité (4).

2. Filtre à liquide selon la revendication 1,
**caractérisé par** les caractéristiques:
- l'espace de réceptacle (11) situé entre les côtés purifié et brut (24 ;8) de la cartouche filtrante (3) communique avec un canal d'écoulement (34) s'étendant à travers la barre (9) vers l'extérieur de la barre (9),
- l'espace purifié (24) du logement de filtre (2) communique par l'intermédiaire d'ouvertures (36) prévues dans la première rondelle d'extrémité (4) avec l'espace de réceptacle (11).

3. Filtre à liquide selon une des revendications précédentes,
**caractérisé en**
**ce que** sur les rondelles d'extrémité (4,5) respectivement une zone circonférentielle, située radialement à l'extérieur est prévue, dans laquelle la cartouche filtrante annulaire peut respectivement venir reposer de manière étanche sur le logement de filtre (2) afin de réaliser l'espace de tuyau de filtre (8) défini par ces zones étanches.

4. Filtre à liquide selon une des revendications précédentes,
**caractérisé en**
**ce que** dans les zones d'étanchéité situées radialement à l'extérieur des rondelles d'extrémité (4,5) des bagues d'étanchéité radiales (6) sont respectivement prévues.

5. Filtre à liquide selon une des revendications précédentes,
**caractérisé en**
**ce que** au moins un canal de liaison (28) situé à l'intérieur de la première rondelle d'extrémité (4) débouche à l'intérieur de la zone circonférentielle située radialement à l'intérieur de cette première rondelle d'extrémité (4) dans un espace annulaire (29) situé axialement entre deux zones étanchéifiées par rapport à la barre (9) en l'état monté apte à fonctionner de la cartouche filtrante annulaire (3).

6. Filtre à liquide selon la revendication 5,
**caractérisé en**
**ce que** les zones étanches prévues sur la cartouche filtrante annulaire (3), entre lesquelles le canal de liaison (28) ressort radialement à l'intérieur hors de la rondelle d'extrémité (4), sont conçues comme des bagues d'étanchéité (13,30) prévues en vue d'un positionnement étanche sur la barre (9).

7. Filtre à liquide selon une des revendications précédentes,
**caractérisé en**
**ce que** du côté purifié de la cartouche filtrante annulaire (3), un élément de séparation annulaire (21) pour les composants du liquide purifié est prévu.

8. Filtre à liquide selon la revendication 7,
**caractérisé par** les caractéristiques :
- l'élément de séparation annulaire (21) est relié solidement à la deuxième rondelle d'extrémité (5),
- dans une zone contiguë à la première rondelle d'extrémité (4) de l'élément de séparation (21), une portion venant se placer de manière étanche par rapport à la première rondelle d'extrémité (4) ou à la barre (9).

9. Filtre à liquide selon une des revendications précédentes, dans lequel la barre (9) peut être reliée de manière amovible étanche au logement de filtre (2).

10. Filtre à liquide selon une des revendications précédentes,
**caractérisé en**
**ce que** à l'intérieur de la barre (9) un dispositif de chauffage formé par des éléments chauffants (32) électriques est prévu.

11. Filtre à liquide selon une des revendications précédentes,
**caractérisé en**
**ce que** le logement de filtre (2) est conçu comme une cartouche en tôle fermée de manière irréversible.

12. Filtre à liquide selon une des revendications précédentes comme filtre à carburant d'un moteur à combustion interne d'une véhicule automobile, dans lequel l'espace de réceptacle (11) dans le logement de filtre (2) sert d'espace d'accumulation d'eau pour l'eau séparée du carburant purifié du côté purifié de la cartouche filtrante annulaire (3) et l'élément de séparation (21) présent le cas échéant est conçu comme un séparateur d'eau.

13. Filtre à liquide selon une des revendications précédentes,
**caractérisé en**
**ce que** à l'intérieur de la barre (9), un canal d'écoulement (34) pour évacuer l'eau captée dans l'espace de réceptacle est prévu.

14. Filtre à liquide selon une des revendications précédentes,
**caractérisé en**
**ce que** entre la deuxième rondelle d'extrémité (5) et le côté frontal axial contigu du logement de filtre (2) un premier espace (16) séparé du côté purifié (24), relié au côté brut est prévu, qui communique d'un côté avec un embout d'alimentation de liquide (15) menant à travers le logement de filtre (2) et d'un autre côté avec l'intérieur de la barre (9).

15. Filtre à liquide selon une des revendications précédentes,
**caractérisé en**
**ce que** entre la deuxième rondelle d'extrémité (5) et le côté frontal axial contigu (10) du logement de filtre (2), un deuxième espace (20) séparé du côté purifié (8), relié au côté purifié (24) est prévu, qui communique avec un embout d'évacuation (25) du liquide purifié guidé à travers le logement de filtre (2).
